**Europäisches Patentamt**

**European Patent Office**

**Office européen des brevets**

(11) Veröffentlichungsnummer: **0 257 242 B1**

## (12) EUROPÄISCHE PATENTSCHRIFT

(45) Veröffentlichungstag der Patentschrift: **27.11.91**

(51) Int. Cl.⁵: **C08L 21/00**

(21) Anmeldenummer: **87109444.7**

(22) Anmeldetag: **01.07.87**

(54) **Verwendung gehärteter Partikel aus elastomerem Material als Beimischung zu Elastomeren vor deren Aushärtung.**

(30) Priorität: **15.07.86 DE 3623795**

(43) Veröffentlichungstag der Anmeldung:
**02.03.88 Patentblatt 88/09**

(45) Bekanntmachung des Hinweises auf die
Patenterteilung:
**27.11.91 Patentblatt 91/48**

(84) Benannte Vertragsstaaten:
**AT CH ES FR GB IT LI NL SE**

(56) Entgegenhaltungen:
**DE-A- 2 133 150**
**FR-A- 2 286 164**

**GUMMI, ASBEST, KUNSTSTOFFE, Band 36, 1983, Seiten 540-544, Gentner Verlag, Stuttgart, DE; L. SLUSARSKI et al.: "Der Einfluss des zerkleinerten Gummis auf Elastomereigenschaften"**

**INTERNATIONAL POLYMER SCIENCE AND TECHNOLOGY, Band 9, Nr. 10, 1982, Seiten T/34-T/38, Shawbury, Shrewsbury, GB; P. ELFFERDING: "Rubber powder as a secondary raw material for the rubber industry. Part II"**

(73) Patentinhaber: **REHAU AG + Co**
**Rheniumhaus**
**W-8673 Rehau(DE)**

(72) Erfinder: **Der Erfinder hat auf seine Nennung verzichtet**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Es ist aus der DE-OS 2 133 150 bekannt, elastomerem Ausgangsmaterial vor dessen Aushärtung gehärtetes elastomeres Krümelmaterial als Füllgut beizufügen, wobei hier in der Regel elastomeres Abfallmaterial verwendet wird. Auf diese Weise kann das gehärtete elastomere Abfallmaterial, das sonst kaum mehr Verwendung finden könnte, sinnvoll wiederverwendet werden. Bevorzugt werden hierbei Pulver großer Feinheit, z.B. solche, die ein Sieb der Maschenweite von 0,2 mm passieren. Damit kann der Bildung von Ermüdungsrissen bei Kautschukvulkanisaten unter dynamischer Beanspruchung entgegengewirkt werden.

Das elastomere Abfallmaterial kann auch in einer Schneidmühle zu einer Fraktion unterschiedlicher Korngrößen zerschlagen werden, wobei der Hauptanteil in Partikelgrößen über 1 mm besteht und ein geringer Staubanteil als nicht schädliche Beimengung mit verarbeitet wird.

Auf diese Weise lassen sich z.B. Umhüllungen von Rundholmen bei Förderanlagen erzeugen, bei denen das Haftverhalten einer solchen elastomeren Umhüllung vorteilhaft in Erscheinung tritt. Derartige Umhüllungen werden im Extrusionsverfahren erzeugt und das fraktionierte Mahlgut wird dem Ausgangsmaterial eines solchen Extrusionsprozesses vorher ähnlich einer Füllstoffbeigabe zugemischt. Extrudiert wird dann beispielsweise ein Schlauch mit den beigemischten, bereits ausgehärteten Partikeln, welche von dem originalen Ausgangsmaterial eingehüllt sind und in dem fertigen, vulkanisierten Endprodukt eine rauhe, unruhige Oberfläche bilden.

Der Nachteil dieser Herstellungsart ist darin zu sehen, daß eine Mehrzahl zu großer Partikel verwendet wird, welche grobe Erhöhungen an den Oberflächen des Endproduktes bilden, die das Gleitverhalten ungünstig beeinflussen.

Aus der Fachzeitschrift "Gummi, Asbest, Kunststoffen" 10/1983, Seiten 540 ff ist es ferner bekannt, daß zerkleinerte Gummipartikel als Beigabe zu Kautschukvulkanisaten deren Elastomereigenschaften beeinflussen können. Die durch die Verarbeitung von Altreifen gewonnenen Gummipartikel wirken günstig auf die dynamischen Eigenschaften der Vulkanisate.

Auch aus der Fachveröffentlichung "International Polymer Science and Technology" Vol.9 (1982) No. 10 T/34 ff ist die Zugabe von gehärteten Partikeln aus der Altreifenaufbereitung zu Kautschukvulkanisaten bekannt. Auch hier werden diese Partikel als Füllstoffe zur Beeinflussung der dynamischen Eigenschaften der Endprodukte verwendet.

Hier setzt die Erfindung ein, die es sich zur Aufgabe gestellt hat, eine optimale Fraktion und ein ebensolches Zumischungsverhältnis gehärteter Partikel aus elastomerem Material als Zuschlagstoffe zu ungehärtetem, elastomerem Ausgangsmaterial vor dessen Aushärtung anzugeben, mit denen eine definierte unruhige Oberfläche der Endprodukte erzielbar ist. Erfindungsgemäß wird dazu vorgeschlagen, daß die gehärteten Partikel mit einer Partikelgröße von 0,1-1 mm in einer Größenordnung von 5-60 Teilen zu jeweils 100 Teilen ungehärteten, elastomeren Materials beigemischt werden.

Die Partikelgröße kann vorteilhaft 0,3 bis 0,7 mm betragen. Ferner können die Mischungsanteile der gehärteten Partikel zwischen 20 bis 40 Teile zu je 100 Teilen des ungehärteten elastomeren Materials ausmachen.

Die Erfindung macht sich die Tatsache nutzbar, daß die angegebene Fraktion der Größe nach eine optimale Gleitfähigkeit bei optimaler Griffigkeit des Endproduktes bewirkt. Bei der Verwendung zu großer Partikel wird - wie bereits erwähnt - die Gleitfähigkeit, aber auch die Griffigkeit eines solchen Endproduktes ungünstig beeinflußt. Es bilden sich dabei zu große Luftspalten beispielsweise zwischen den einzelnen Partikeln, so daß die guten Eigenschaften einer elastomeren Oberfläche negativ beeinflußt werden.

Werden dagegen zu kleine Partikel, beispielsweise in Staubform verwendet, wird die Rauhtiefe zu klein und die Luftspalte zwischen den einzelnen eingeschlossenen Partikeln an der Oberfläche werden zu gering, so daß die Griffigkeit eingeschränkt bzw. ganz aufgehoben und die Gleitfähigkeit ebenfalls negativ beeinflußt wird.

Bei der beanspruchten Partikelgröße treten diese Nachteile nicht in Erscheinung. Hier ist die Oberfläche des Endproduktes in einer durch die Partikelgröße definierten Rauhigkeit gegeben, wobei weder zu große noch zu kleine Partikel an der Oberfläche eine Unterbrechung des definierten Bereiches mit den geschilderten negativen Auswirkungen ergibt.

## Patentansprüche

1. Verwendung einer Fraktion gehärteter Partikel aus elastomerem Material mit einer Partikelgröße von 0,1 bis 1 mm in einer Größenordnung von 5-60 Teilen als Beimischung zu jeweils 100 Teilen ungehärteten elastomeren Materials vor dessen Aushärtung zur Erziehung einer definiert unruhigen Oberfläche bei Elastomer-Produkten.

2. Verwendung nach Anspruch 1, wobei die Partikelgröße 0,3 bis 0,7 mm beträgt.

3. Verwendung nach Anspruch 1 oder 2, wobei 20 bis 40 Teile der gehärteten Partikel je 100 Teile ungehärteten elastomeren Materials beigemischt werden.

## Claims

1. Use of a fraction of cured particles of elastomer material with a particle size ranging from 0.1 to 1 mm in a quantity of 5-60 parts as an additive in 100 parts of uncured elastomer material, the fraction of cured particles being added to the uncured elastomer material before it sets in order to achieve a defined uneven surface on elastomer products.

2. Use as described in claim 1 with the particle size ranging between 0.3 and 0.7 mm.

3. Use as described in claim 1 or 2 with 20 to 40 parts of the cured particles being added to 100 parts of uncured elastomer material.

## Revendications

1. Utilisation d'une fraction de particule durcie d'un matériau élastomère d'une dimension de particule de 0,1 à 1 mm dans un ordre de grandeur de 5 à 60 parts à titre d'additif pour chaque 100 parts de matériau élastomère non durci avant son durcissement en vue du relèvement d'une surface irrégulière définie sur les produits élastomères.

2. Utilisation selon la revendication 1, les dimensions de particules étant entre 0,3 et 0,7 mm.

3. Utilisation selon la revendication 1 ou 2, 20 à 40 parts des particules durcies étant mélangées à 100 parts de matériau élastomère non durci.